# FASCICULE DE BREVET EUROPEEN

(11) **EP 1 557 025 B1**
(45) Date de publication et mention de la délivrance du brevet: **03.05.2006**
(21) Numéro de dépôt: 03767866.1
(22) Date de dépôt: 30.10.2003
(51) Int. Cl.: H04L 29/06, H04L 9/08

(54) **PROCEDE SIMPLIFIE DE RENOUVELLEMENT DE CLES SYMETRIQUES DANS UN RESEAU NUMERIQUE**
VEREINFACHTES VERFAHREN ZUR SYMMETRISCHEN SCHLÜSSELERNEUERUNG IN EINEM DIGITALEN NETZWERK
SIMPLIFIED METHOD FOR RENEWING SYMMETRICAL KEYS IN A DIGITAL NETWORK

(30) Priorité: 30.10.2002 FR 0213982
(43) Date de publication de la demande: 27.07.2005
(73) Titulaire: Thomson Licensing, 92100 Boulogne-Billancourt (FR)
(72) Inventeur: DURAND, Alain, F-35000 Rennes (FR); ANDREAUX, Jean-Pierre, F-35000 Rennes (FR)
(74) Mandataire: Berthier, Karine
(86) Numéro de dépôt international: PCT/FR2003/003250
(87) Numéro de publication internationale: WO 2004/043036

(56) Documents cités:
- CA-A- 2 381 110
- MENEZES ET AL: "Handbook of Applied Cryptography, PASSAGE" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 497-552, XP002248262 ISBN: 0-8493-8523-7
- YU-LUN HUANG ET AL: "Practical key distribution schemes for channel protection" COMPUTER SOFTWARE AND APPLICATIONS CONFERENCE, 2000. COMPSAC 2000. THE 24TH ANNUAL INTERNATIONAL TAIPEI, TAIWAN 25-27 OCT. 2000, LOS ALAMITOS, CA, USA,IEEE COMPUT. SOC, US, 25 octobre 2000 (2000-10-25), pages 569-574, XP010523833 ISBN: 0-7695-0792-1

## Description

### Domaine de l'invention

La présente invention se rapporte d'une manière générale au domaine de la gestion de dés cryptographiques dans des réseaux numériques locaux et plus particulièrement dans des réseaux numériques domestiques.

### Etat de la technique

Un tel réseau est constitué d'un ensemble de dispositifs reliés entre eux par un bus numérique, par exemple un bus selon la norme IEEE 1394. Il comprend notamment deux types de dispositifs :
- Des dispositifs sources capables d'émettre des données sur le réseau : Ces dispositifs peuvent récupérer les données à travers un « canal » externe au réseau.
- Des dispositifs de présentation, adaptés à recevoir les données circulant sur le réseau, pour les traiter ou les présenter à l'utilisateur.

Ainsi, si on prend l'exemple d'un réseau numérique domestique destiné à véhiculer des données audio et/ou vidéo dans différentes pièces d'une maison, les dispositifs sources sont par exemple des décodeurs numériques recevant des programmes vidéo de l'extérieur du réseau, via une antenne satellite ou via une connexion au câble, ou bien des lecteurs de disques optiques diffusant sur le réseau, sous forme numérique, des données (audio et/ou vidéo) lues sur un disque (le disque contient dans ce cas des données provenant de l'extérieur du réseau). Les dispositifs de présentation sont par exemple des récepteurs de télévision permettant de visualiser des programmes vidéo reçus du réseau ou, d'une manière plus générale tout type d'appareil ayant la capacité de déchiffrer des données chiffrées.

Si on se place du point de vue des fournisseurs de contenu qui fournissent les données en provenance de l'extérieur du réseau local, notamment des prestataires de services diffusant des programmes télévisés payants ou bien des éditeurs de disques optiques par exemple, il est nécessaire d'éviter que ces données transmises ne soient copiées et puissent circuler facilement (par exemple en étant copiées sur un disque optique ou tout autre support d'enregistrement) d'un réseau local à l'autre.

Pour cela, il est connu de transmettre les données sous forme secrète en les chiffrant à l'aide d'algorithmes de cryptographie utilisant des clés qui sont connues au préalable des appareils autorisés à recevoir ces données ou bien qui sont échangées selon des protocoles particuliers sécurisés entre le fournisseur de contenu et ces appareils.

La demande de brevet PCT WO 00/62505 au nom de THOMSON multimédia, déposée le 31 mars 2000 et revendiquant la priorité d'une demande de brevet française au nom du même demandeur, déposée le 13 avril 1999 et publiée sous la référence FR 2792482, concerne un réseau domestique dans lequel une clé publique propre au réseau est utilisée pour chiffrer les données circulant entre des appareils du réseau, typiquement des dispositifs sources précédemment mentionnés vers des dispositifs de présentation. Seuls les appareils de présentation de ce réseau possèdent la clé privée correspondant à la clé publique. Le couple (clé publique, clé privée) étant spécifique au réseau, des données chiffrées dans le cadre de ce réseau ne peuvent être déchiffrées par des appareils d'un autre réseau.

Un procédé similaire est aussi connu dans la publication "Handbook of applied Cryptography", Menezes et al., pp. 497-500 et 551-552, qui est un ouvrage reflétant les connaissances générales en matière de cryptographie.

"L"utilisation d'un couple de clés asymétriques présente certains avantages, mais aussi quelques inconvénients. Un des principaux avantages est qu'aucun secret n'est mémorisé dans les appareils sources: ces appareils ont connaissance de la clé publique, mais non de la clé privée. Cependant, la mise en oeuvre de clés asymétriques est d'une relative lenteur, par rapport à celle de clés symétriques. De plus, la durée de vie de clés asymétriques est faible, exigeant une révocation périodique et la création de nouvelles clés. Dans ce cas, des données chiffrées avec une clé, puis enregistrées, pourraient soudainement ne plus être déchiffrables sur le réseau. De plus, un nombre important de paires de clés asymétriques est nécessaire.

On serait alors tenté par la mise en oeuvre d'une clé symétrique pour chiffrer les données. Or, cela exigerait que les dispositifs source aient connaissance de cette clé, ce qui leur imposerait des contraintes de sécurité accrues et les rendrait par conséquent plus onéreux.

La présente invention vise à résoudre les problèmes précités.

### Exposé de l'invention

L'invention, a pour objet un procédé de renouvellement de clé symétrique dans un réseau de communication comprenant un dispositif d'un premier type contenant :
- une première clé symétrique pour chiffrer des données à transmettre à un dispositif d'un second type raccordé au réseau ; et
- ladite première clé symétrique chiffrée avec une seconde clé symétrique de réseau connue seulement d'au moins un dispositif d'un second type raccordé audit réseau.

Selon le procédé, le dispositif d'un premier type génère un nombre aléatoire, puis il calcule une nouvelle clé symétrique en fonction de la première clé symétrique et du nombre aléatoire. Il chiffre ensuite les données à transmettre avec la nouvelle clé symétrique puis il transmet à un dispositif d'un second type, via le réseau :
- les données chiffrées avec la nouvelle clé symétrique;
- le nombre aléatoire; et
- la première clé symétrique chiffrée avec la seconde clé symétrique de réseau.

Le procédé peut en outre comporter les étapes qui consistent, pour le dispositif d'un second type qui reçoit les données transmises par le dispositif d'un premier type, à déchiffrer, avec la seconde clé symétrique de réseau, le chiffrement de la première clé symétrique ; puis à déterminer, en fonction de la première clé symétrique ainsi obtenue et du nombre aléatoire reçu, la nouvelle clé symétrique; et à déchiffrer les données reçues avec la nouvelle clé symétrique ainsi obtenue.

### Brève description des dessins

D'autres caractéristiques et les avantages de l'invention apparaîtront à travers la description d'exemples de réalisation particuliers non limitatifs, explicité à l'aide des figures jointes, parmi lesquelles :
- la figure 1 est un schéma bloc d'un réseau de communication reliant plusieurs appareils dans lequel est mise en oeuvre l'invention;

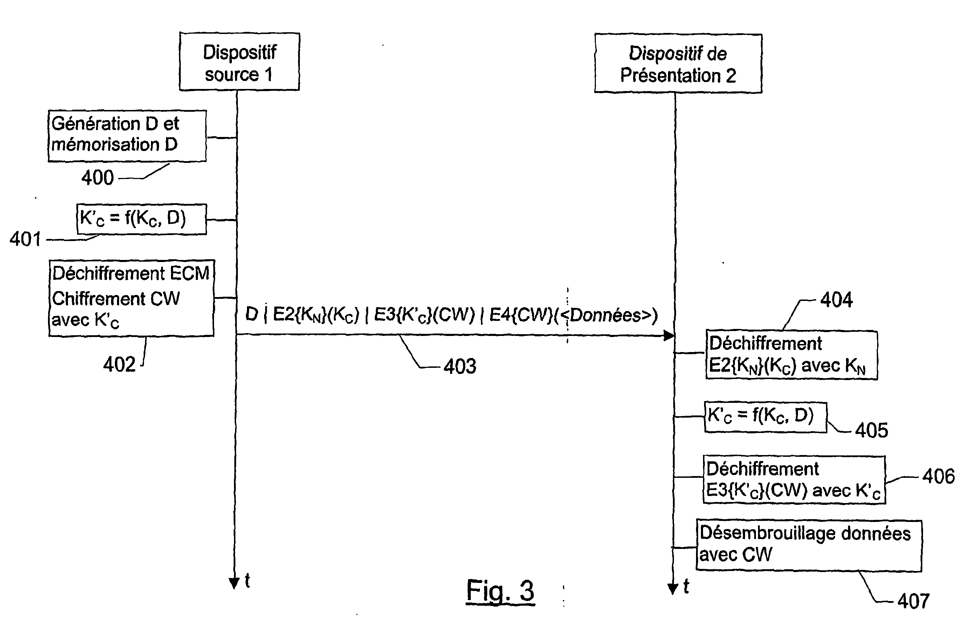

- les figures 2 et 3 sont des diagrammes temporels illustrant les communications entre un dispositif source de données chiffrées et un dispositif de présentation desdites données dans un tel réseau selon un mode de réalisation de l'invention.

### Description détaillée de modes de réalisation de l'invention

On décrira dans un premier temps un exemple de réseau de communication pour illustrer la façon dont les données et les clés diverses sont échangées. Par la suite, on décrira de manière plus détaillée la gestion proprement dite des clés et leur utilisation pour une transmission de données sécurisée entre un dispositif source et un dispositif de présentation.

### I] Description du réseau

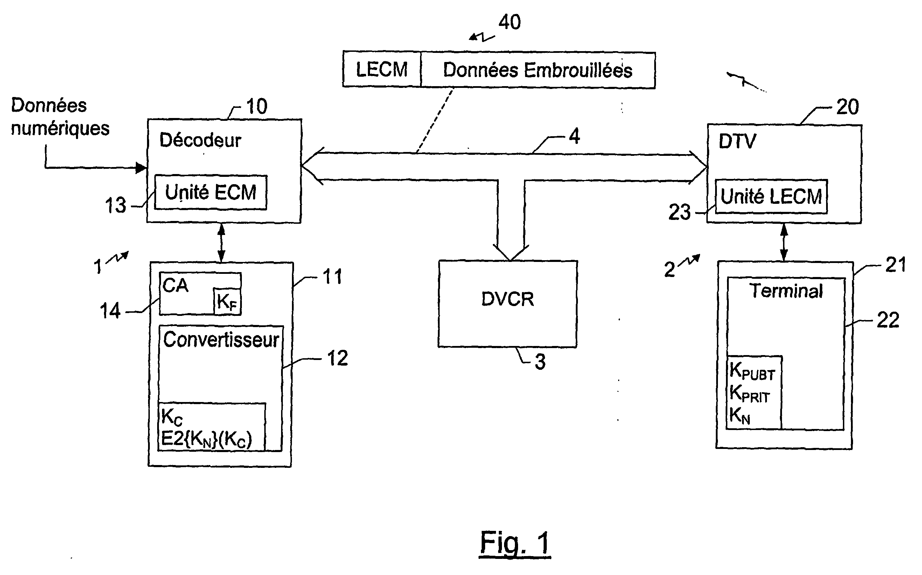

Sur la figure 1, on a représenté un réseau numérique domestique comprenant un dispositif source 1, un dispositif de présentation 2 et un dispositif d'enregistrement 3 reliés ensembles par un bus numérique 4, qui est par exemple un bus selon la norme IEEE 1394.

Le dispositif source 1 comprend un décodeur numérique 10 doté d'un lecteur de carte à puce muni d'une carte à puce 11. Ce décodeur reçoit des données numériques, notamment des programmes audio/vidéo distribués par un prestataire de service.

Le dispositif de présentation 2 comprend un récepteur de télévision numérique (DTV) 20 doté d'un lecteur de carte à puce muni d'une carte à puce 21 et le dispositif d'enregistrement 3 est notamment un magnétoscope numérique (DVCR).

Les données numériques qui entrent sur le réseau via le dispositif source 1 sont en général des données embrouillées par un fournisseur de contenu, par exemple selon le principe de la télévision payante. Dans ce cas, les données sont embrouillées à l'aide de mots de contrôle CW (de l'anglais « Control Word ») qui sont eux-mêmes transmis dans le flux de données sous forme chiffrée à l'aide d'une clé de chiffrement K_{F} en étant contenus dans des messages de contrôle ECM (de l'anglais « Entitlement Control Message »). La clé de chiffrement K_{F} est mise à la disposition des utilisateurs qui ont payé pour recevoir les données, notamment en étant stockée dans une carte à puce. Dans l'exemple de la figure 1, la carte à puce 11 contient une telle clé K_{F} ainsi qu'un module d'accès conditionnel CA 14 capable de déchiffrer les mots de contrôle CW.

On notera cependant que bien souvent, l'autorisation de recevoir les données n'est que temporaire, tant que l'utilisateur paie un abonnement au fournisseur de contenu. La clé K_{F} est donc modifiée régulièrement par le fournisseur de contenu. Grâce au procédé qui sera décrit ci-dessous, l'utilisateur pourra néanmoins enregistrer des programmes transmis pendant qu'il est abonné et les relire autant de fois qu'il le souhaite sur son propre réseau, même lorsque la clé K_{F} aura été changée. Par contre, comme les données sont enregistrées sous forme embrouillée de la manière décrite, elles ne pourront être relues que sur le réseau de l'utilisateur qui les a enregistrées.

Le dispositif source 1 qui reçoit ces données numériques embrouillées les met ensuite en forme pour qu'elles soient diffusées sur le réseau numérique selon un format de protection spécifique au réseau domestique. Le décodeur 10 comporte un module « unité ECM » 13 qui extrait du flux de données reçu les messages ECM contenant les mots de contrôle chiffrés à l'aide de la clé K_{F} pour les transmettre au module CA 14. Celui-ci déchiffre les mots de contrôle CW et les transmet à un module convertisseur 12 également contenu dans la carte à puce 11.

Le module convertisseur 12 contient une clé symétrique K_{C} dont la génération et la transmission entre les appareils du réseau seront décrites ultérieurement.

On notera que sur la figure 1, le réseau est représenté dans l'état dans lequel il se trouve lorsque tous les appareils ont été raccordés et ont échangé des clés cryptographiques selon des procédés qui seront décrits ultérieurement. La figure 1 illustre en particulier, pour le dispositif source 1 et le dispositif de présentation 2, toutes les clés contenues dans chaque dispositif. Les clés représentées ne sont pas forcément présentes à tout moment dans les dispositifs.

En particulier, le dispositif de présentation 2 comporte dans une mémoire une clé symétrique de réseau K_{N}. Cette clé est distribuée à tout nouveau dispositif de présentation nouvellement connecté au réseau selon un procédé sécurisé qui ne fait pas l'objet de la présente invention et ne sera pas décrit davantage. De plus, chaque dispositif de présentation possède une paire de clés asymétriques (K_{PUBT}, K_{PRIT}), la première clé étant publique et la seconde privée. Ces clés sont utilisées dans le cadre de l'authentification des appareils du réseau, ainsi que pour l'échange initial des clés symétriques comme on le verra ultérieurement.

Le module convertisseur 12 utilise la clé symétrique K_{C} pour chiffrer les mots de contrôle CW et il insère ces mots de contrôle chiffrés dans des messages notés LECM (de l'anglais « Local Entitlement Control Message »). Ces messages LECM ont la même fonction que les messages ECM inclus dans le flux de données reçus initialement, à savoir transmettre les mots de contrôle sous une forme protégée, mais dans les messages LECM, les mots de contrôle CW y sont chiffrés à l'aide de la clé symétrique K_{C} au lieu d'être chiffrés à l'aide de la clé K_{F} du fournisseur de contenu.

De préférence, la clé K_{C} est fréquemment renouvelée, par exemple lors de l'initiation de chaque transmission de données, dans le but d'éviter que le dispositif source ne comporte un secret à long terme, qui exigerait une protection renforcée.

Le module convertisseur 12 insère en outre dans les messages LECM la clé symétrique K_{C} elle même, mais chiffrée à l'aide d'une autre clé symétrique K_{N} par un algorithme E2, c'est à dire E2{K_{N})(K_{C}).

Dans le reste de la description, on utilisera toujours la notation « E{K}(M) » pour signifier chiffrement de données M par un algorithme E avec une clé K.

La clé K_{N}, que nous appellerons dans la suite clé de réseau, ne réside pas dans l'appareil source 1, mais dans l'appareil de présentation 2. Suite à la création de la clé K_{C}, cette dernière est transmise de manière sécurisée à l'appareil de présentation 2, qui la chiffre à l'aide de K_{N} et retransmet le résultat à l'appareil source qui le mémorise dans le module convertisseur 12 de sa carte, pour utilisation ultérieure.

Les messages LECM ainsi construits sont ensuite transmis à l'unité ECM 13 qui les insère dans le flux de données à la place des messages ECM. Il est à noter que lorsque le contenu reçu n'est pas déjà sous forme embrouillée comme décrit ci-dessus et ne contient pas de message ECM, le module convertisseur 12 est chargé dans ce cas de mettre les données sous cette forme pour que le flux de données diffusé sur le bus 4 soit toujours sous la forme de paquets de données tels le paquet 40 représenté à la figure 1 contenant un message LECM et des données embrouillées.

On peut résumer le contenu de ce paquet comme suit :
LECM |E4{CW}(<données>) ; soit :
E2{K_{N}}(K_{C})|E3{K_{C}}(CW) | E4{CW}(<données>);
où « | » représente l'opérateur de concaténation.

Les données circulent donc toujours sous forme chiffrée dans le bus 4, et seuls les appareils ayant accès à la clé symétrique K_{C} sont capables de déchiffrer les mots de contrôles CW et donc de déchiffrer les données. Ces appareils sont ceux possédant la clé de réseau K_{N}. Ceci empêche donc la diffusion vers d'autres réseaux locaux de toute copie effectuée dans le réseau domestique de la figure 1.

Lorsque les paquets de données 40 sont reçus par le récepteur de télévision numérique 20, ils sont transmis au module « Unité LECM » 23 qui en extrait les messages LECM pour les transmettre à un module terminal 22 contenu dans la carte à puce 21. Ce dernier déchiffre tout d'abord E2{K_{N})(K_{C}) à l'aide de la clé K_{N} qu'il contient pour obtenir la clé K_{C}. Ensuite, à l'aide de la clé K_{C}, il déchiffre E3{K_{C}}(CW) pour obtenir le mot de contrôle CW qu'il transmet au module « Unité LECM » 23. Celui-ci est alors en mesure de désembrouiller les données E4{CW}(<données>) à l'aide du mot de contrôle. Les données désembrouillées sont ensuite présentées à l'utilisateur. Dans le cas de données vidéo, celles-ci peuvent être visualisées sur le récepteur de télévision 20.

Grâce au réseau numérique local qui vient d'être décrit, le flux de données numériques reçu d'un fournisseur de contenu est transformé par le dispositif source qui le reçoit en un flux de données dans lequel les données (ou plus précisément les mots de contrôle CW) sont chiffrées avec à une clé symétrique K_{C}. La clé K_{C} est transmise avec les données chiffrées avec son aide, en étant elle-même chiffrée à l'aide d'une autre clé symétrique, la clé de réseau K_{N}. Le flux de données qui circule dans le réseau local contient- ainsi des données ayant un format spécifique à ce réseau local qui ne peuvent être déchiffrées que par les dispositifs de présentation du réseau local qui contiennent tous la clé du réseau K_{N}.

De plus, comme la clé K_{C} est diffusée avec les données (sous forme chiffrée), elle peut être enregistrée, par exemple par le magnétoscope numérique (DVCR) 4, en même temps que les données ce qui permettra un accès ultérieur aux données chiffrées.

Par ailleurs, comme la clé de réseau K_{N} n'est pas stockée dans les dispositifs sources, ceux-ci ne contiennent donc pas de secret « long terme », exigeant des précautions de sécurité accrues.

La clé K_{C} doit cependant être renouvelée fréquemment et nous allons maintenant décrire plus précisément comment cette clé K_{C} est générée et comment son chiffrement à l'aide de la clé de réseau K_{N} est obtenu selon différentes variantes.

II] Génération et gestion de la clé symétrique K_{C} lors d'une première connexion au réseau d'un dispositif source

Supposons que le dispositif source 1 vient juste d'être connecté au réseau domestique illustré à la figure 1. Il ne possède au départ aucune clé dans son module convertisseur 12.

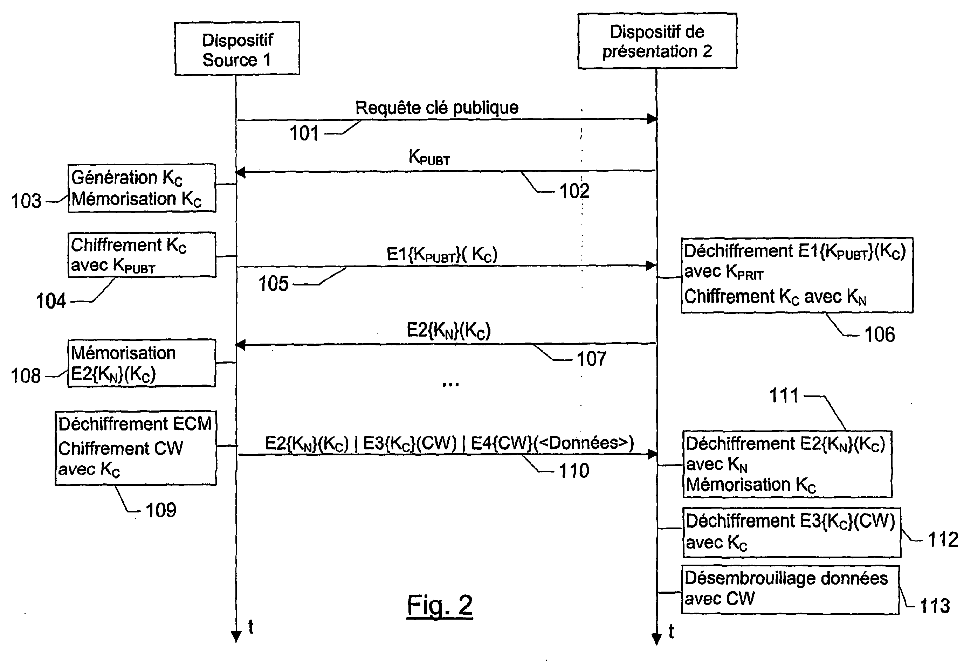

Le figure 2 illustre les étapes d'un protocole initial permettant au dispositif source d'obtenir une clé symétrique K_{C} chiffrée à l'aide de la clé de réseau K_{N} détenue par un dispositif de présentation du réseau.

Lors d'une première étape 101, le dispositif source 1 lance une requête sur le réseau, demandant à tout dispositif de présentation de lui transmettre sa clé publique. Sur la figure 1, nous avons représenté un seul dispositif de présentation mais naturellement, le réseau numérique domestique peut comporter plusieurs dispositifs de présentation différents raccordés au bus 4. Tous les dispositifs de présentation présents et en état « d'éveil » sur le réseau (c'est à dire ceux dont l'alimentation n'est pas coupée ou bien qui ne sont pas dans un mode de mise en veille avec une alimentation très réduite des circuits du dispositif) sont supposés répondre à la requête du dispositif source en renvoyant leur clé publique

Nous supposerons dans la suite que la première clé reçue par le dispositif source 1 est la clé publique K_{PUBT} envoyée au cours de l'étape 102 par le dispositif de présentation 2. Le dispositif source 1 prend en compte le premier message reçu et échangera ensuite des messages avec le dispositif de présentation correspondant.

Le dispositif source 1, et plus précisément le module convertisseur 12, génère ensuite de manière aléatoire une clé symétrique « court terme » K_{C} et il mémorise cette clé K_{C} (étape 103). Il utilise par exemple pour la génération de K_{C} un générateur de nombre pseudo-aléatoire.

La clé K_{C} est ensuite chiffrée à l'étape 104 avec la clé publique K_{PUBT} par l'intermédiaire d'un algorithme de chiffrement asymétrique E1, par exemple l'algorithme « RSA OAEP » (pour « Rivest, Shamir, Adleman Optimal Asymmetric Encryption Padding » - décrit dans « *PKCS#1: RSA Cryptography Specifications, version 2.0 (October 1998)* »), puis transmise sous forme chiffrée E1{K_{PUBT}}(K_{C}) au dispositif de présentation 2 (étape 105). Ce dernier déchiffre la clé K_{C} à l'aide de sa clé privée KPRIT puis il la chiffre de nouveau selon un algorithme de chiffrement symétrique E2 à l'aide de la clé symétrique de réseau K_{N} (étape 106) et renvoie K_{C} ainsi chiffrée (i.e. E2{K_{N}}(K_{C})) au dispositif source (étape 107), qui mémorise cette information (étape 108), de préférence dans son module convertisseur 12.

A l'issu de cette première série d'étapes 101 à 108, le dispositif source 1 possède donc dans son module convertisseur 12, une clé symétrique K_{C} qui va pouvoir être utilisée pour chiffrer des données, typiquement des mots de contrôles CW, et le chiffrement de cette clé K_{C} à l'aide de la clé de réseau K_{N}. Il est donc prêt à diffuser des données sur le réseau. On notera que le dispositif source ne connaît pas la clé secrète de réseau K_{N}.

Les étapes ultérieures 109 à 113 illustrées à la figure 2 concernent la transmission de données « utiles », c'est à dire typiquement des données audio vidéo embrouillées.

Les données reçues par le dispositif source 1 comportent des messages ECM. Le dispositif source déchiffre ces derniers pour en extraire les mots de contrôle CW puis il chiffre les mots de contrôle CW à l'aide de la clé symétrique K_{C} par l'intermédiaire d'un algorithme de chiffrement symétrique E3 (étape 109). Le dispositif source 1 réinsère ensuite ces mots de contrôle chiffrés (i.e. E3{K_{C}}(CW)) dans le flux de données et transmet l'ensemble sur le bus 4 à destination du ou des dispositifs de présentation présents sur le réseau (étape 110). Le dispositif source envoie également lors de l'étape 110 la clé K_{C} chiffrée à l'aide de K_{N} qu'il avait précédemment mémorisée à l'étape 108. En pratique, les données E2{K_{N}}(K_{C}) et E3{K_{C}}(CW) sont insérées dans le message LECM qui est transmis avec les données « utiles» embrouillées E4{CW}(<Données>).

On notera également que les données utiles transmises à l'étape 110 sont chiffrées selon un algorithme de chiffrement symétrique E4 à l'aide des mots de contrôle CW.

Le dispositif de présentation 2 qui reçoit les données transmises à l'étape 110 déchiffre tout d'abord E2{K_{N}}(K_{C}) à l'aide de K_{N} pour obtenir la clé K_{C} qui est mémorisée (étape 111) et, à l'aide de K_{C}, il peut déchiffrer E3{K_{C}}(CW) pour accéder aux mots de contrôle CW (étape 112) et ainsi désembrouiller les données utiles (étape 113).

Les algorithmes de chiffrement symétriques E2, E3 et E4 peuvent être identiques ou différents. On pourra utiliser par exemple l'algorithme « AES » (pour « Advanced Encryption Standard » - aussi appelé « Rijndael» - et décrit par J. Daemen et V. Rijmen dans « *Proceedings from the First Advanced Encryption Standard Candidate* Conference, *National lnstitute of Standards and Technology (NIST), août 1998* »), ou encore l'algorithme « TwoFish » (décrit dans l'article « *TwoFish - a Block Encryption Algorithm* » de B. Schneier, J. Kelsey, D. Whiting, D. Wagner, N. Ferguson et publié dans le même rapport de conférence NIST).

### III] Renouvellement de la clé symétrique K_{c}

Lorsqu'il est nécessaire de renouveler la clé K_{C}, notamment avant de diffuser un nouveau contenu numérique sur le réseau, on pourrait envisager d'utiliser le même protocole que celui décrit à la figure 2 (étapes 101 à 108). Néanmoins, ce protocole implique des calculs de chiffrement utilisant des algorithmes asymétriques qui exigent une puissance de calcul assez importante et qui sont relativement long à mettre en oeuvre dans des processeurs de carte à puce. C'est pourquoi, pour le renouvellement de la symétrique « court terme » K_{C}, un second protocole est utilisé.

Ce second protocole permettant le renouvellement de la clé symétrique K_{c} est illustré par la figure 5. Selon ce protocole, lors d'une première étape 400, le dispositif source 1 (ou plus précisément son module convertisseur 12) génère un nombre aléatoire D et il le mémorise. Il calcule ensuite (étape 401) la nouvelle clé symétrique K'_{C} en appliquant une fonction f à la clé K_{C} mémorisée lors du premier protocole (à l'étape 103) et au nombre D. La fonction f est notamment une fonction de dérivation classique telle qu'une fonction de hachage (on peut par exemple utiliser la fonction SHA-1 décrite dans le document « *Secure Hash Standard, FIPS PUB 180-1, National Institute* of *Standard Technology, 1995* ») ou bien encore une fonction de cryptage telle que la fonction XOR. C'est une fonction dite « à sens unique » (« one way function » en anglais), c'est-à dire que, connaissant le résultat f(K_{C}, D) et le nombre D, il est impossible de retrouver la clé K_{C}.

L'étape 402 correspond à l'étape 109 du protocole de la figure 2 et consiste à extraire les messages ECM inclus dans les données reçues par le dispositif source pour les déchiffrer dans le module CA 14 et en extraire les mots de contrôle CW qui sont ensuite chiffrés dans le module convertisseur en utilisant la nouvelle clé symétrique K'_{C}. Par contre la diffusion des données « utiles » sur le réseau par le dispositif source est un peu différente de celle effectuée à l'étape 110.

En effet, à l'étape 403, le dispositif source insère dans le message LECM la donnée D générée à l'étape 400. Il insère en outre dans ce message LECM:
- la clé symétrique K_{C} initiale chiffrée avec la clé du réseau K_{N} (E2{K_{N}}(K_{C})) et
- un ou des mots de contrôle CW chiffré(s) avec la nouvelle clé symétrique K'_{C} (E3{K'c}(CW)).

Lorsque le dispositif de présentation 2 reçoit les données diffusées à l'étape 403, il déchiffre tout d'abord E2{K_{N}}(K_{C}) avec la clé du réseau K_{N} (étape 404), puis il calcule la nouvelle clé symétrique K'_{C} à partir de K_{C} et de D en appliquant la fonction f (étape 405). Ayant obtenu K'_{C,} il peut ensuite déchiffrer E3{K'_{C}}(GW) pour obtenir le mot de contrôle CW (étape 406) et désembrouiller les données « utiles » à l'aide de ce mot de contrôle (étape 407).

Grâce à ce protocole, il n'est pas nécessaire d'effectuer un échange de données entre un dispositif source et un dispositif récepteur pour obtenir le renouvellement d'une clé symétrique K'_{C}. Ceci est particulièrement avantageux par exemple lorsque aucun dispositif de présentation n'est en état « d'éveil » dans le réseau et qu'un utilisateur souhaite enregistrer un programme (contenu numérique) reçu par le dispositif source. Le dispositif source pourra ainsi renouveler sa clé de chiffrement symétrique K_{C} sans avoir besoin d'un quelconque dispositif de présentation et pourra donc diffuser des données utiles accompagnées de messages LECM protégés par cette clé renouvelée pour que les données soient enregistrées dans une unité de stockage numérique telle que le magnétoscope 3 de la figure 1.

## Revendications

1. Procédé de renouvellement de clé symétrique dans un réseau de communication comprenant un dispositif d'un premier type (1) contenant :
- une première clé symétrique (K_{C}) pour chiffrer des données (CW) à transmettre à un dispositif d'un second type raccordé au réseau ; et
- ladite première clé symétrique (K_{C}) chiffrée (E2{K_{N}}(K_{C})) avec une seconde clé symétrique de réseau (K_{N}) connue seulement d'au moins un dispositif d'un second type (2) raccordé audit réseau ;
le procédé comportant les étapes qui consistent, pour le dispositif d'un premier type, à :
(a) générer un nombre aléatoire (D) ;
(b) calculer une nouvelle clé symétrique (K'_{C}) fonction de la première clé symétrique (K_{C}) et dudit nombre aléatoire (D) ;
(c) chiffrer les données à transmettre (CW) avec la nouvelle clé symétrique (K'_{C}) ; et
(d) transmettre à un dispositif d'un second type (2), via ledit réseau :
- les données chiffrées avec la nouvelle clé symétrique (E3{K'_{C}}(CW)) ;
- le nombre aléatoire (D) ; et
- ladite première clé symétrique chiffrée avec la seconde clé symétrique de réseau (E2{K_{N}}(K_{C})).

2. Procédé selon la revendication 1, dans lequel la fonction (f) utilisée pour le calcul de la nouvelle clé symétrique (K'_{c}) est une fonction de dérivation à sens unique.

3. Procédé selon la revendication 2, dans lequel la fonction (f) est une fonction de hachage ou de cryptage.

4. Procédé selon l'une des revendications précédentes, comportant en outre les étapes consistant, pour le dispositif d'un second type (2) qui reçoit les données transmises à l'étape (d), à :
(e) déchiffrer, avec la seconde clé symétrique de réseau (K_{N}), le chiffrement (E2{K_{N}}(K_{C})) de la première clé symétrique (K_{C});
(f) déterminer, en fonction de la première clé symétrique (K_{C}) obtenue à l'étape (e) et dudit nombre aléatoire (D), la nouvelle clé symétrique (K'_{C}); et
(g) déchiffrer les données reçues avec la nouvelle clé symétrique (K'_{C}) ainsi obtenue.

## Claims

1. Method for renewing a symmetric key in a communication network comprising a device of a first type (1) containing:
- a first symmetric key (K_{C}) for encrypting the data (CW) to be sent to a device of a second type connected to the network; and
- said first symmetric key (K_{C}) encrypted (E2{K_{N}}(K_{C})) with a second symmetric network key (K_{N}) known only by at least one device of a second type connected to said network.
the method comprising the steps that consist, for the device of a first type, in:
(a) generating a random number (D);
(b) computing a new symmetric key (K'_{C}) as a function of the first symmetric key (K_{C}) and said random number (D);
(c) encrypting the data to be transmitted (CW) with the new symmetric key (K'_{C}); and
(d) transmitting to a device of a second type (2), via said network:
- the data encrypted with the new symmetric key (E3{K'_{C}}(CW));
- the random number (D); and
- said first symmetric key encrypted with the second symmetric network key (E2{K_{N}}{K_{C})).

2. Method according to claim 1, wherein the function (f) used to compute the new symmetric key (K'_{C}) is a one-way derivation function.

3. Method according to claim 2, wherein the function (f) is a hash or encryption function.

4. Method according to one of the previous claims, also comprising the steps consisting, for the device of a second type (2) that receives data transmitted at step (d), in:
(e) decrypting, with the second symmetric network key (K_{N}), the encryption (E2{K_{N}}(K_{C})) of the first symmetric key (K_{C});
(f) determining, based on the first symmetric key (K_{C}) obtained at step (e) and on said random number (D), the new symmetric key (K'_{C}); and
(g) decrypting the data received with the new symmetric key (K'_{C}) thus obtained.

## Patentansprüche

1. Verfahren zur Erneuerung eines symmetrischen Schlüssels in einem Kommunikationsnetzwerk mit einer Vorrichtung eines ersten Typs (1) mit
- einem ersten symmetrischen Schlüssel (K_{C}) zur Verschlüsselung von Daten (CW), die an eine an das Netzwerk angeschlossene Vorrichtung eines zweiten Typs zu übertragen sind und
- dem ersten symmetrischen Schlüssel (K_{C}), der mit einem zweiten symmetrischen Netzwerkschlüssel (K_{N}) verschlüsselt ist (E2{K_{N}}(K_{C})), der lediglich von mindestens einer an das Netzwerk angeschlossenen Vorrichtung eines zweiten Typs (2) bekannt ist, wobei
das Verfahren die Schritte aufweist, welche für die Vorrichtung eines ersten Typs darin bestehen:
(a) eine Zufallszahl (D) erzeugen,
(b) in Abhängigkeit von dem ersten symmetrischen Schlüssel (K_{C}) und der Zufallszahl (D) einen neuen symmetrischen Schlüssel (K'_{C}) berechnen,
(c) die zu übertragenden Daten (CW) mit dem neuen symmetrischen Schlüssel (K'_{C}) verschlüsseln und
(d) an eine Vorrichtung eines zweiten Typs (2) über das Netzwerk übertragen:
- die mit dem neuen symmetrischen Schlüssel (E3{K'_{C}}(CW)) verschlüsselten Daten,
- die Zufallszahl (D) und
- den mit dem zweiten symmetrischen Netzwerkschlüssel (E2{K_{N}}(K_{C})) verschlüsselten ersten symmetrischen Schlüssel.

2. Verfahren nach Anspruch 1, bei dem die für die Berechnung des neuen symmetrischen Schlüssels (K'_{C}) verwendete Funktion (f) eine unidirektionale Ableitungsfunktion ist.

3. Verfahren nach Anspruch 2, bei dem die Funktion (f) eine Hash- oder Kryptofunktion ist.

4. Verfahren nach einem der vorhergehenden Ansprüche, welche ferner für die Vorrichtung des zweiten Typs (2), welche die in dem Schritt (d) übertragenen Daten empfängt, die Schritte aufweist, die darin bestehen:
(e) mit dem zweiten symmetrischen Netzwerkschlüssel (K_{N}) die Verschlüsselung (E2{K_{N}} (K_{C})) des ersten symmetrischen Schlüssels (K_{c}) entschlüsseln;
(f) in Abhängigkeit von dem ersten, bei dem Schritt (e) erhaltenen symmetrischen Schlüssel (K_{C}) und von der Zufallszahl (D) den neuen symmetrischen Schlüssel (K'_{C}) bestimmen, und
(g) die empfangenen Daten mit dem neuen, derart erhaltenen symmetrischen Schlüssel (K'_{C}) entschlüsseln.
